Europäisches Patentamt

European Patent Office

Office européen des brevets

(19)

(11) **EP 0 885 254 B1**

(12) **FASCICULE DE BREVET EUROPEEN**

(45) Date de publication et mention
de la délivrance du brevet:
**13.08.2003 Bulletin 2003/33**

(21) Numéro de dépôt: **97908311.0**

(22) Date de dépôt: **06.03.1997**

(51) Int Cl.⁷: **C08J 3/20**, B01J 13/02

(86) Numéro de dépôt international:
**PCT/FR97/00396**

(87) Numéro de publication internationale:
**WO 97/032920 (12.09.1997 Gazette 1997/39)**

(54) **PARTICULES COMPOSITES COMPRENANT UN POLYMERE ORGANIQUE ET UN OXYDE ET/OU HYDROXYDE**

VERBUNDPARTIKEL, DIE EIN ORGANISCHES POLYMER UND EIN OXID UND/ODER HYDROXID ENTHALTEN

COMPOSITE PARTICLES INCLUDING AN ORGANIC POLYMER AND AN OXIDE AND/OR HYDROXIDE

(84) Etats contractants désignés:
**AT BE CH DE DK ES FI FR GB GR IE IT LI LU NL PT SE**

(30) Priorité: **06.03.1996 FR 9603067**

(43) Date de publication de la demande:
**23.12.1998 Bulletin 1998/52**

(73) Titulaire: **RHODIA CHIMIE**
**92408 Courbevoie Cédex (FR)**

(72) Inventeurs:
• **CHOPIN, Thierry**
**F-95320 Saint-Leu-la-Forêt (FR)**
• **DUPUIS, Dominique**
**F-95170 Deuil-la-Barre (FR)**
• **LABARRE, Dominique**
**F-92200 Neuilly-sur-Seine (FR)**
• **MUR, Gilles**
**F-94350 Villiers (FR)**

(74) Mandataire: **Wattremez, Catherine et al**
**Rhodia Services,**
**Direction de la Propriété Industrielle,**
**40, rue de la Haie-Coq**
**93306 Aubervilliers Cedex (FR)**

(56) Documents cités:
**EP-A- 0 462 388          CA-A- 2 157 332**

• **DATABASE WPI Week 9425 Derwent Publications Ltd., London, GB; AN 94-205237 XP002021395 & JP 06 142 491 A (NIPPON GOSEI GOMU KK) , 24 Mai 1994**
• **DATABASE WPI Week 9252 Derwent Publications Ltd., London, GB; AN 92-427918 XP002021396 & JP 04 323 280 A (KANAYA I) , 12 Novembre 1992**
• **DATABASE WPI Week 9007 Derwent Publications Ltd., London, GB; AN 90-048210 XP002021397 & JP 02 001 307 A (JAPAN SYNTHETIC RUBBER) , 5 Janvier 1990 & CHEMICAL ABSTRACTS, vol. 113, no. 6, 6 Août 1990 Columbus, Ohio, US; abstract no. 43269p, page 146;**

**Description**

La présente invention a pour objet des particules composites comprenant un coeur à base d'au moins un polymère organique, et une écorce à base d'au moins un oxyde et/ou au moins un hydroxyde d'aluminium, de silicium, de zirconium et/ou d'un métal de transition.

L'invention concerne aussi des procédés de préparation de ces particules ainsi que leur utilisation comme charges ou additifs pour les plastiques ou les élastomères.

L'invention a de même pour objet l'utilisation desdites particules composites pour préparer des particules creuses comprenant une écorce à base d'au moins un oxyde et/ou un hydroxyde d'aluminium, de silicium, de zirconium et/ou d'un métal de transition ; ces particules creuses pouvant, elles aussi, être employées comme charges ou additifs pour plastiques et élastomères.

Pour conférer aux matériaux thermoplastiques une bonne rigidité, il est connu d'introduire des particules pleines minérales. Cependant, on a constaté que les plastiques ainsi renforcés ne présentent pas des propriétés mécaniques (par exemple résistance aux chocs) suffisantes à basse température notamment.

D'autre part, il est connu d'introduire dans les élastomères, et en particulier dans les élastomères pour pneumatiques, des charges minérales sous forme de particules de silice, de noir de carbone afin d'améliorer la résistance aux déchirures et à l'abrasion des élastomères. Mais alternativement, ces pneumatiques renforcés manquent de souplesse à basse température.

La présente invention concerne donc des particules composites constituées d'un coeur comprenant au moins un polymère organique, au moins en partie recouvert par une ou plusieurs couches comprenant au moins un oxyde et/ou au moins un hydroxyde d'aluminium, de silicium, de zirconium, et/ou d'un métal de transition et, entre le coeur et la couche precité, une couche comprenant un métal alcalino-terreux sous forme essentiellement d'hydroxyde.

La présente invention concerne de même un procédé de préparation de particules composites comprenant les étapes suivantes : on introduit à une suspension comprenant au moins un polymère organique, au moins un sel de métal alcalino-terreux, soluble dans les conditions de pH de ladite suspension, puis on augmente le pH de la phase liquide de la suspension par addition d'une base comme la soude, la potasse ou l'ammoniaque, on met en contact ladite suspension avec au moins un agent précipitant et au moins un sel soluble d'aluminium, de silicium, de zirconium, et/ou d'un métal de transition, puis on sépare et on sèche les particules composites ainsi obtenues.

Un autre objet de fa présente invention est constitué par l'utilisation des particules composites pour l'obtention de particules creuses.

Enfin l'invention concerne l'utilisation des particules composites, mais aussi des particules creuses, comme charges ou additifs dans les plastiques et les élastomères.

D'autres caractéristiques, détails et avantages de l'invention apparaîtront plus clairement à la lecture de la description et des exemples qui vont suivre.

L'invention concerne tout d'abord des particules composites composées d'un coeur à base d'au moins un polymère organique, au moins en partie recouvert d'une couche comprenant un métal alcalino-terreux et puis d'une couche oxyde et/ou d'hydroxyde d'aluminium, de silicium, de zirconium ou d'un métal de transition, les éléments précités pouvant être présents seuls ou en mélange, sous l'une et/ou l'autre des deux formes.

Plus précisément, le revêtement (ou indifféremment, l'écorce, la couche) à base d'oxyde et/ou d'hydroxyde peut recouvrir en partie seulement ou en totalité, chaque coeur de polymère organique. Il est possible aussi que ledit revêtement soit en partie incrusté dans la couche périphérique externe du coeur en polymère organique.

Selon la présente invention, entre le coeur à base de polymère organique et le revêtement précité, il existe une couche intermédiaire à base essentiellement d'un hydroxyde de métal alcalino-terreux.

La nature des polymères organiques entrant dans la composition des particules composites est du type de celle de particules de latex, c'est-à-dire de particules de (co)polymères issues de procédés classiques de (co)polymérisation en émulsion de monomères organiques copolymérisables.

Parmi ces (co)polymères entrant dans la composition des particules composites, on peut citer notamment, et sans intention de se limiter, ceux issus de la polymérisation des monomères suivants :

a) : les (méth)acrylates d'alkyle, d'hydroalkyle, de chloroalkyle, les chloroacrylates d'alkyle ou d'hydroxyalkyle dont le radicale alkyle comporte de préférence de 1 à 18 atomes de carbone, tels que :

- (méth)acrylate de méthyle,
- (méth)acrylate d'éthyle ou hydroxyéthyle,
- (méth)acrylate de propyle ou hydroxypropyle,
- (méth)acrylate de n-butyle, d'isobutyle ou d'hydroxybutyle,
- (méth)acrylate d'amyle, de lauryle, d'isoamyle,
- (méth)acrylate de (2 éthyl-2 hexyle), d'éthyle, d'octyle, de méthyle, de butyle, de (diméthyl-3,3 butyle), d'isobutyle, d'isopropyle,
- (méth)acrylate de chloroéthyle,
- chloroacrylate de butyle, de méthyle, d'éthyle, d'isopropyle, de cyclohexyle,

b) : les esters vinyliques ou allyliques d'acides carboxyliques saturés, linéaires ou ramifiés en $C_1$-$C_{12}$, tels que :

- acétate de vinyle,
- propionate de vinyle,
- butyrate de vinyle,
- acétate d'allyle,
- versatate® de vinyle (marque déposée pour des esters d'acides α-ramifiés en Cg-$C_{11}$),
- laurate de vinyle,
- benzoate de vinyle,
- triméthylacétate de vinyle,
- pivalate de vinyle,
- trichloroacétate de vinyle,

c) : les esters et les hemi-esters d'acides polycarboxyliques α,β-éthyléniquement insaturés ayant de 4 à 24 atomes de carbone, tels que :

- le fumarate de méthyle, de diméthyle, d'éthyle, de butyle, de 2-éthyl hexyle,
- le maléate de méthyle, de diméthyle, d'éthyle, de butyle, de 2-éthyl hexyle,

d) : les halogénures vinyliques tels que les chlorures, fluorures de vinyle, de vinylidène, vinylidène,...
e) : les oléfines fluorées telles que le tetrafluoroéthylène,...
f) : les vinyl aromatiques présentant de préférence au plus 24 atomes de carbone et choisis en particulier parmi :

- styrène,
- α-méthylstyrène, 4-méthylstyrène, 2-méthylstyrène, 3-méthylstyrène,
- 4-méthoxystyrène,
- 2-hydroxyméthylstyrène,
- 4-éthylstyrène,
- 4-éthoxystyrène,
- 3,4 diméthylstyrène,
- 2-chlorostyrène, 3-chlorostyrène,
- 4-chloro-3 méthylstyrène,
- 4-tert-butylstyrène.
- 4-dichlorostyrène, 2,6-dichlorostyrène, 2,5-difluorostyrène,
- 1-vinylnaphtalène,
- vinyltoluène,

g) : les diènes aliphatiques conjugués présentant de préférence de 3 à 12 atomes de carbone tels que :

- 1,3-butadiène,
- isoprène,
- 2-chloro-1,3 butadiène,

h) : les nitriles α-β-éthyléniquement insaturés ayant de préférence de 3 à 6 atomes de carbone tels que l'acrylonitrile et le méthacrylonitrile.

Il est possible de copolymériser certains de ces monomères principaux avec jusqu'à 10% en poids d'autres monomères, dits comonomères, à caractère ionique, tels que:

- les monomères acides carboxyliques α,β-éthyléniquement insaturés mentionnés ci-dessus incluant les acides mono et polycarboxyliques tels que :

. acide acrylique,
. acide méthacrylique,

- acide maléique,
- acide itaconique,
- acide fumarique,
- acide crotonique,...

- les monomères éthyléniques comportant des groupes amines secondaires, tertiaires ou quatemisées tels que : vinyl-pirydines, diéthyl-aminoéthylméthacrylate,...
- les monomères éthyléniques sulfonés tels que : vinylsulfonate, styrènesulfonate,...
- les monomères éthyléniques Zwitterionique tels que : acrylate de sulfopropyl-(diméthylamino-propyle),...
- les amides d'acides carboxyliques insaturés tels que : acrylamide, méthacrylamide,...
- les esters de (méth)acrylates et d'alcools polyhydroxypropyles ou polyhydroxy-éthylés.

Il est possible aussi d'utiliser dans le cadre de la présente invention des polymères anioniques, tels que le polyacétate de vinyle, ou des polymères amphotères.

On peut mentionner plus particulièrement les copolymères du styrène avec les acrylates ou le butadiène. Ils pourront avantageusement être choisis parmi les copolymères butadiène-styrène possédant des fonctions carboxylées, sulfatées ou sulfonatées, les copolymères acryliques et les copolymères butadiène - styrène - acrylamide.

Les élastomères polysiloxanes peuvent aussi être employés comme polymère organique, dans la présente invention.

Ces polymères organiques présentent plus particulièrement une température de transition vitreuse comprise entre -200°C et 200°C. Selon un mode de réalisation particulièrement avantageux et préféré de l'invention, la température de transition vitreuse est comprise entre -200 et 0°C.

Comme cela a été indiqué auparavant, les particules composites selon l'invention présentent une couche partielle ou totale recouvrant le polymère organique décrit ci-dessus; ayant une couche intermédiaire à base d'un hydroxyde de métal alcalino-terreux; ladite couche externe étant constituée d'au moins un oxyde et/ou d'au moins un hydroxyde d'aluminium, de silicium, de zirconium, et/ou d'un métal de transition. Par métal de transition, on entend plus particulièrement les métaux de la quatrième période, allant du scandium au zinc.

Conviennent particulièrement bien le silicium, l'aluminium, le titane, le zirconium.

Il est à noter que cette couche externe peut comprendre un oxyde et/ou un hydroxyde d'un seul ou de plusieurs éléments dans une même couche. On ne sortirait cependant pas du cadre de la présente invention avec un mélange de particules composites dont la couche est de nature différente, avec un plusieurs des éléments précités.

Selon une première variante de la présente invention, les particules composites selon l'invention comprennent une seule couche d'oxyde et/ou d'hydroxyde.

Selon une seconde variante de la présente invention, lesdites particules composites comprennent au moins deux couches, à base d'au moins un oxyde et/ou d'au moins un hydroxyde des éléments précités. Dans un tel cas, les deux couches superposées, recouvrant au moins partiellement le polymère organique, et se recouvrant elles-mêmes au moins partiellement, peuvent être à base d'un ou plusieurs éléments tels que ceux mentionnés auparavant

Selon une troisième variante de l'invention, les particules composites présentent, outre une ou plusieurs couches à base d'oxyde et/ou d'hydroxyde, au moins une couche de carbonate de calcium. Cette couche peut se trouver directement en contact avec le polymère organique. Elle peut aussi se situer sur la couche externe d'hydroxyde et/ou d'oxyde, ou encore entre les couches d'hydroxyde et/ou d'oxyde, s'il en existe plusieurs, ou seulement entre certaines d'entre elles. Il est à noter que lesdites particules composites peuvent comprendre plusieurs couches à base de carbonate de calcium.

Les particules composites selon l'invention présentent, entre le coeur comprenant au moins un polymère organique et la couche comprenant la ou les couches d'oxyde et/ou d'hydroxyde précitées, éventuellement la ou les couches de carbonate de calcium, une couche comprenant essentiellement un ou plusieurs métaux alcalino-terreux essentiellement sous la forme d'hydroxyde.

Il est à noter que les particules selon l'invention sont plus particulièrement sphériques.

Les particules composites selon l'invention ont un diamètre moyen d'au plus 5 μm. De manière avantageuse, il est habituellement d'au moins 0,04 μm. De préférence le diamètre moyen est compris entre 0,1 et 0,3 μm.

La détermination du diamètre moyen de ces particules, et de toutes les autres particules définies dans le texte, est réalisée par MET.

Ces particules composites présentent habituellement un indice de dispersion d'au plus 0,50 et de préférence inférieur à 0,30.

L'indice de dispersion est déterminé, ici et pour tous les autres indices de dispersion définis dans les texte, par la formule :

EP 0 885 254 B1

$$I = \frac{\varnothing_{84} - \varnothing_{16}}{2\varnothing_{50}}$$

dans laquelle :

- $\varnothing_{84}$ est le diamètre des particules pour lequel 84% des particules ont un diamètre inférieur à $\varnothing_{84}$,
- $\varnothing_{16}$ est le diamètre des particules pour lequel 16% des particules ont un diamètre inférieur à $\varnothing_{16}$,
- $\varnothing_{50}$ est le diamètre moyen des particules.

L'indice de dispersion est mesuré par microscopie électronique par transmission (MET).

Il est à noter que l'on en sortirait pas du cadre de la présente invention en préparant des particules composites bimodales, par exemple.

Le diamètre du coeur de polymère organique est habituellement compris entre 0,04 et 5 µm.

L'épaisseur totale du revêtement, c'est-à-dire comprenant une ou plusieurs couches à base d'au moins un oxyde et/ou au moins un hydroxyde des éléments précités, éventuellement au moins une couche de carbonate de calcium, et éventuellement une couche d'hydroxyde de métal alcalino-terreux, est généralement d'au plus 500 nm. Elle est habituellement d'au moins 1 nm, et plus particulièrement d'au moins 5 nm. De préférence elle est comprise entre 5 et 200 nm.

Les dimensions données ci-dessus le sont à titre indicatif car il peut être plus ou moins difficile de déterminer précisément la taille du coeur de polymère organique et l'épaisseur de la ou des couches (l'écorce) l'enrobant, dans la mesure où, comme indiqué précédemment, il peut y avoir une incrustation de ces dernières dans la couche périphérique externe du coeur en polymère organique. En effet, le polymère organique est mou et déformable, par exemple lorsqu'il se trouve à une température supérieure à sa température de transition vitreuse. Par conséquent, le revêtement peut s'y incruster. Les mesures de la taille du coeur de polymère organique et de l'épaisseur de la ou des couches précitées seront donc modifiées du fait de l'existence d'une couche intermédiaire issue de l'interaction entre le polymère organique et le revêtement.

Les particules composites selon l'invention présentent de préférence une surface spécifique comprise entre 1 et 200 m$^2$/g, de préférence entre 1 et 100 m$^2$/g.

On entend par surface spécifique, la surface spécifique BET déterminée par adsorption d'azote conformément à la norme ASTM D 3663-78 établie à partir de la méthode BRUNAUER - EMMETT - TELLER décrite dans le périodique "The Journal of the american Society", 60, 309 (1938).

Cette surface spécifique peut révéler l'aspect plus ou moins lisse du revêtement enrobant le polymère organique.

Des procédés de préparation des particules composites selon l'invention vont maintenant être décrits.

Il est à noter que ces procédés peuvent faire l'objet d'une exploitation à l'échelle industrielle du fait des concentrations élevées en sels et en alcoxydes susceptibles d'être mises en oeuvre. On peut en effet réaliser l'obtention de la ou des couches avec une teneur de 250 g de solides par kilogramme.

Le ou les polymères organiques sont mis en oeuvre sous la forme de latex.

La phase liquide de ce latex de polymère organique de départ est en général une phase aqueuse, alcoolique ou hydroalcoolique.

Par exemple, dans le cas où les latex ont été obtenus par polymérisation en dispersion de monomères organiques, la phase liquide peut être hydroalcoolique ou alcoolique.

De préférence, on met en oeuvre des suspensions alcooliques ou hydroalcooliques de polymère(s).

La nature des particules de latex est du type de celle des polymères des particules composites définies précédemment.

Comme cela a été indiqué auparavant, il est possible de mélanger deux types de latex présentant des tailles de particules différentes, de manière à obtenir des particules composites dont la répartition de population est bimodale.

Parmi les alcools convenables, on peut citer particulièrement les alcools solubles dans l'eau. Ainsi, plus particulièrement, on choisit des monoalcools saturés, linéaires ou ramifiés, présentant 1 à 6 atomes de carbone. On peut de même employer des diols comme l'éthylèneglycol. Conviennent particulièrement le méthanol, l'éthanol étant préféré.

Par ailleurs, le procédé de préparation des particules composites est mis en oeuvre à la pression atmosphérique, bien que des pressions supérieures ou inférieures ne soient pas exclues.

A l'issue de cette première étape, on obtient une suspension de particules composites. Plus particulièrement, ces suspensions sont des dispersions colloïdales, c'est-à-dire de fines particules de dimensions colloïdales en suspension dans une phase liquide, qui comme cela a été décrit auparavant, peut être alcoolique, ou hydroalcoolique.

On notera que l'oxyde et/ou l'hydroxyde d'aluminium, de silicium, de zirconium et/ou de métal de transition peuvent se trouver soit totalement dans les colloïdes, soit simultanément sous forme d'ions et dans les colloïdes, sans toutefois que la proportion représentée par la forme ionique n'excède 10% environ du total de l'oxyde et/ou l'hydroxyde d'aluminium, de silicium, de zirconium ou de métal de transition dans la dispersion colloïdale.

Dans l'invention, on met de préférence en oeuvre des dispersions colloïdales dans lesquelles l'oxyde et/ou l'hydroxyde d'aluminium, de silicium, de zirconium et/ou de métal de transition sont totalement dans les colloïdes.

On effectue en suite le séchage des particules composites résultantes.

Celui-ci peut avoir lieu directement sur la suspension obtenue.

Il peut être aussi possible d'effectuer le séchage sur une suspension a été séparée du milieu réactionnel. La séparation des particules du dit milieu peut avoir lieu selon les méthodes classiques, telle que la centrifugation par exemple.

Il est fait remarquer que cette seconde possibilité est particulièrement avantageuse dans le cas où l'on souhaite faire subir aux particules composites un traitement de surface préalable au séchage.

Ce traitement consiste en règle générale à mettre à nouveau en suspension les particules composites puis à introduire dans la suspension, au moins un composé organique, comme l'acide stéarique, les stéarates, les huiles polysiloxanes entre autres.

Ce type de prétraitement permet d'éviter, si nécessaire, l'agglomération des particules composites au cours de cette étape de séchage. Il permet de même de conférer des propriétés particulières aux particules, comme par exemple un caractère hydrophobe. Ce traitement permet aussi de compatibiliser les particules composites avec le milieu dans lequel elles seront par la suite introduites.

Selon un mode de réalisation particulier de l'invention, la séparation des particules composites du mélange réactionnel et leur séchage se font par atomisation, c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines particules, du mélange initial, et d'autre part le séchage des particules obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est comprise entre 400 et 900°C et plus particulièrement entre 600 et 800°C, la température du solide séché entre 150 et 300°C.

En ce qui concerne le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible. D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

Selon un autre mode préféré, l'atomisation est réalisée de telle sorte que la température d'entrée dans l'atomiseur est de l'ordre de 200°C et celle de sortie de 120°C.

On ne sortirait pas du cadre de la présente invention en mettant en oeuvre le traitement de surface précité sur des particules composites séchées. Ce qui a été indiqué à ce sujet ne sera pas repris ici. Ce type de traitement permet de compatibiliser ou d'améliorer la compatibilité des particules composites ainsi traitées, dans le milieu où on les introduit comme charge ou additifs.

Les sels d'aluminium, de silicium, de zirconium, de métal de transition convenables sont choisis parmi les sels solubles dans reau ou dans des solutions hydroalcooliques, et qui donnent un précipité sous forme d'oxyde et/ou d'hydroxyde lorsqu'ils sont mis en présence d'un agent précipitant adéquat.

A titre d'exemple, on peut citer sans intention de se limiter, les silicates de métal alcalin, les aluminates de métal alcalin, les oxychlorures, les chlorures, les nitrates, les sulfates, d'aluminium, de zirconium, d'un métal de transition.

La quantité de sels mise en contact avec le latex est calculée de telle sorte que l'on obtienne un revêtement des particules de latex présentant une épaisseur d'au plus 500 nm.

Les sels précités sont de préférence mis en oeuvre sous forme d'une solution aqueuse.

L'agent précipitant peut être choisi parmi des composés acides ou basiques. A titre d'exemples d'agents précipitant convenables à la présente invention, on peut citer sans intention de s'y restreindre l'acide phosphorique, l'acide sulfurique, l'acide acétique, les hydroxydes de métaux alcalins, l'ammoniaque, le dioxyde de carbone (par bullage).

La quantité d'agent précipitant mise en jeu est telle que le pH du milieu est maintenu dans une gamme où la précipitation des éléments est optimale. D'une manière générale, cette gamme de pH se situe entre 8 et 11. Par ailleurs, l'opération a lieu de préférence, de telle sorte que le pH reste constant.

L'introduction du sel dans la suspension comprenant notamment le latex est telle que l'on évite la sursaturation en sels, du milieu. En d'autres termes, on évite la formation de particules d'aluminium, de silicium, de zirconium, de métal de transition "hors grain".

Ceci est effectué en contrôlant notamment le débit d'introduction dudit sel, ce que l'homme du métier est en mesure de faire en effectuant de simples essais de routine.

La température de précipitation est de préférence elle aussi contrôlée. Elle est plus particulièrement comprise entre 20 et 120°C, de préférence entre 20 et 90 °C.

L'opération de précipitation a lieu plus particulièrement sous agitation.

De plus, le procédé de préparation de suspensions de particules composites est mis en oeuvre à la pression atmosphérique, bien que des pressions supérieures ou inférieures ne soient pas exclues.

Comme cela a été indiqué auparavant, la présente invention a pour objet des particules composites comprenant entre le coeur polymérique et le revêtement, une couche comprenant au moins un composé de métal alcalino-terreux, essentiellement sous forme d'hydroxyde.

Parmi les métaux alcalino-terreux conviennent tout particulièrement le calcium et le magnésium.

Ce type de particules résulte d'une variante du procédé de préparation desdites particules mettant en oeuvre des sels solubles.

Ces particules peuvent être obtenues en mettant en oeuvre les étapes qui vont être décrites, préalablement à la mise en contact du ou des polymères organiques avec au moins un sels soluble d'aluminium, de silicium, de zirconium ou d'un métal de transition, telle qu'elle vient d'être définie.

Ainsi, on introduit à la suspension comprenant au moins un polymère organique, au moins un sel soluble dans les conditions de pH de la suspension.

De préférence, la suspension est soit aqueuse, soit hydroalcoolique.

Parmi les sels convenables, on peut citer tout particulièrement les halogénures, comme notamment les chlorures, ou encore les sulfates.

Puis on augmente le pH de la phase liquide de la suspension comprenant le ou les sels solubles, par addition d'une base comme la soude, la potasse ou l'ammoniaque. De cette façon, se créé un précipité comprenant essentiellement l'hydroxyde du ou des métaux alcalino-terreux utilisés, à la surface du polymère organique.

Il est à noter que cette variante est particulièrement appropriée pour favoriser l'obtention d'un revêtement homogène autour du polymère organique.

La quantité de sels employée est fonction de l'épaisseur de la couche souhaitée A titre indicatif, la quantité de sel de métal alcalino-terreux est généralement comprise entre 0,5 et 5 g pour 80 g de latex sec.

Une fois l'opération terminée, on met en oeuvre directement, et de façor avantageuse, la seconde méthode de préparation des particules composites selon l'invention. Ainsi, à la suspension comprenant le ou les polymères organiques revêtus au moins en partie d'une couche comprenant essentiellement un alcalino-terreux sous le forme d'un hydroxyde, on introduit simultanément au moins un sel solubles des éléments précités en présence d'un agent précipitant Ce qui a été indiqué précédemment à ce sujet reste valable et ne sera pas repris ici.

On pourrait envisager de séparer les particules ainsi obtenues avant de les traiter conformément à la méthode de synthèse par voie sels, mais cela n'apporte toutefois pas d'avantages particuliers.

Afin de conserver la stabilité du latex et d'éviter sa floculation au cours du procédé de préparation des particules composites, et ce, pour toutes les variantes de synthèse explicitées, on peut ajouter un stabilisant au latex avant la première mise en contact avec la solution de sels solubles des éléments précités, ou encore de sels solubles de métal alcalino-terreux.

On peut choisir comme stabilisant, à titre indicatif, un tensioactif non ionique du type : alkylphénol polyéthoxylé, polyéthylène glycol, polyvynylpyrolidone.

On ajoute généralement 1 à 50 g de stabilisant par kg de latex de polymère organique, et préférentiellement moins de 20 g/kg.

Dans le cas où un stabilisant type tensioactif est ajouté au mélange réactionnel afin de stabiliser ledit latex, il peut être nécessaire d'ajouter simultanément un anti-mousse pour éviter la présence trop importante de bulles.

Les particules en suspension selon l'invention peuvent comprendre au moins deux couches recouvrant au moins partiellement le polymère organique.

Dans le cas de cette possibilité, les particules composites obtenues par mise en oeuvre de l'une des variantes qui viennent d'être décrites, peuvent à nouveau être mises en contact avec une solution d'un sel , de manière à obtenir une couche déposée sur la première. Par conséquent, cela consiste à mettre en oeuvre, de manière successive, plusieurs fois le procédé pour obtenir à chaque fois une couche supplémentaire ; ces opérations étant répétées autant de fois que l'on souhaite déposer de couches.

Ainsi que cela a été mentionné plus haut, les particules en suspensions selon l'invention peuvent comprendre, outre une couche d'hydroxyde et/ou d'oxyde ou plusieurs, une couche de carbonate de calcium. Selon cette possibilité, l'une des étapes du procédé sera la suivante :

- on met en contact au moins un polymère organique, ou des particules composites obtenues selon l'une des variantes précitées, avec du dihydroxyde de calcium,
- on ajoute du dioxyde de carbone.

De cette manière, on obtient un précipité de carbonate de calcium enrobant partiellement ou totalement, chaque particule de polymère organique ou chaque particule composite.

Le dihydroxyde de calcium se présente de manière préférentielle sous la forme d'une suspension de particules de dihydroxyde de calcium de taille variable. Cette suspension de dihydroxyde de calcium peut être obtenue par différents moyens : à partir d'oxyde de calcium ou à partir d'un sel de calcium additionné d'une base (NaOH, KOH, $NH_3$). On préfère les suspensions de dihydroxyde de calcium sous forme de laits de chaux.

La concentration en particules de la suspension de dihydroxyde de calcium peut avantageusement être comprise entre 0,1 et 3 mole/kg.

Sa viscosité pourra varier entre 0.05 et 0,5 Pa/s (viscosité mesurée à 50 $s^{-1}$).

On introduit du dioxyde de carbone sous forme gazeuse dans le mélange de latex ou de particules composites obtenu de manière quelconque.

Il est à noter que si la couche de carbonate de calcium est déposée sur le latex directement, il est avantageux, afin de conserver la stabilité du latex au cours du procédé et d'éviter sa floculation, d'ajouter un stabilisant au latex avant sa mise en présence avec le dihydroxyde de calcium. Les stabilisants, les quantités employées, ainsi que la présence éventuelle d'une agent anti-mousse, qui ont été mentionnés dans le cadre des possibilités précédentes, conviennent toujours à la mise en oeuvre de cette dernière variante.

Il est à noter que l'on peut introduire un inhibiteur de croissance du carbonate de calcium dans le mélange de latex ou de particules composites, et de dihydroxyde de calcium, pour contrôler l'épaisseur de la couche formée de carbonate de calcium précipité. A titre d'exemple, on peut citer l'acide citrique, les citrates, les agents à base de phosphates et parmi les stabilisants du latex définis plus haut.

L'inhibiteur est introduit dans le mélange réactionnel avant le dioxyde de carbone. Les conditions de température et de pressions sont identiques à celles mentionnées pour les variantes précédentes.

Le dioxyde de carbone est de préférence introduit sous la forme d'un mélange gazeux dioxyde de carbone/air ou azote dans un rapport compris entre 5 et 50% en volume de préférence de l'ordre de 30%. L'ajout du dioxyde de carbone se fait généralement en laissant buller le mélange gazeux dans le mélange de latex et de dihydroxyde de calcium.

Le débit d'introduction du dioxyde de carbone est plus particulièrement compris entre 40 ml/h/kg et 200 l/h/kg de mélange de latex ou de particules composites, et de dihydroxyde de calcium. Le débit peut évoluer en fonction de la quantité de latex ou de particules composites à traiter et l'épaisseur de la couche de carbonate de calcium que l'on désire précipiter.

Quelque soit les variantes mises en oeuvre pour obtenir des particules composites comprenant une ou plusieurs couches d'oxyde et/ou d'hydroxyde, et éventuellement de carbonate de calcium, on peut mettre en oeuvre une ou plusieurs étapes de mûrissement.

Celle-ci consiste habituellement à laisser le mélange obtenu, généralement sous agitation. Habituellement la température est comprise entre 20 et 120°C. La durée de cette opération, à titre d'exemple, peut varier de quelques minutes à deux heures.

Les particules composites en suspension ainsi obtenues sont ensuite séchées. On se reportera à la description des divers moyens de séchage décrit plus haut.

Un autre objet de la présente invention est l'utilisation des particules composites précédemment décrites pour l'obtention de particules creuses comprenant au moins un oxyde et/ou un hydroxyde d'aluminium, de silicium, de zirconium, ou d'un métal de transition, et éventuellement une ou plusieurs couches à base de carbonate de calcium, internes, externes ou intermédiaires. Lesdites particules creuses peuvent éventuellement comprendre, en couche interne, au moins partielle, au moins un hydroxyde de métal alcalino-terreux.

Il est à noter que les particules creuses obtenues à partir des particules composites selon l'invention, sont plus particulièrement sphériques.

Elles ont un diamètre moyen d'au plus 5 µm. De manière avantageuse, il est habituellement d'au moins 0,04 µm. Selon un mode de réalisation particulier de l'invention, le diamètre moyen est compris entre 0,1 et 0,3 µm.

Ces particules creuses présentent habituellement un indice de dispersion, tel que défini précédemment, d'au plus 0,50 et de préférence inférieur à 0,30.

tout comme les particules composites, les particules creuses peuvent présenter une répartition bimodale si elles ont été obtenues en utilisant un mélange de deux latex.

L'épaisseur de l'écorce est généralement au plus de 500 nm. Elle est habituellement d'au moins 1 nm, et plus particulièrement d'au moins 5 nm. De préférence, elle est comprise entre 5 et 200 nm.

La surface spécifique de ces particules creuses est comprise entre 1 et $200 m^2/g$, de préférence entre 1 et $100 m^2/g$.

Selon une première variante, les particules creuses sont obtenues par calcination des particules composites décrites ci-dessus.

La calcination est réalisée à une température suffisante pour que le coeur de polymère organique des particules composites soit décomposé en gaz.

Habituellement cette température est comprise entre 400 et 900°C et est plus particulièrement de 650°C.

Par cette calcination, le coeur de polymère organique est entièrement décomposé en gaz qui sont émis à travers l'écorce créant ainsi une particule creuse.

Selon une variante préférée du premier mode de réalisation, les particules composites sont soumises à une élévation de température de l'ordre de 3°C/mn jusqu'à atteindre la température de 650°C. On maintient ensuite les particules à cette température pendant 5 heures.

Selon un second mode de réalisation, les particules creuses sont obtenues par mise en contact des particules composites précitées avec un solvant du polymère organique. Par cette opération, le coeur de polymère organique est dissous. On sépare ensuite les particules du milieu liquide, par exemple par centrifugation, puis on sèche les particules creuses résultantes.

Le séchage est effectué à une température comprise entre 25 et 200°C.

En mettant en oeuvre ce second mode de réalisation, on obtient intermédiairement une suspension de particules creuses. Celle-ci correspond à la suspension obtenue après dissolution du polymère organique.

Il est à noter que l'on peut aussi préparer des suspensions de particules creuses en remettant en suspension lesdites particules séchées, ou bien obtenues par calcination, dans un solvant approprié à l'utilisation que l'on veut en faire.

Les particules creuses peuvent éventuellement faire l'objet d'un traitement de surface, par imprégnation par exemple, un composé organique qui peut être choisi parmi les acides gras, les esters d'acides gras, les huiles polysiloxanes notamment.

Les caractéristiques de diamètre moyen, d'indice de dispersion, de surface spécifique et d'épaisseur de l'écorce des particules creuses définies ci-dessus.

L'invention concerne enfin l'utilisation des particules composites comme charges ou additifs dans les plastiques et les élastomères.

On utilise ces produits en particulier pour tous les plastiques destinés à être renforcés aux chocs tels que les polyoléfines, les polychlorures de vinyle, les polyamides, les polymères styréniques ...

On constate que l'introduction de particules composites selon l'invention apportent aux plastiques des propriétés mécaniques améliorées.

On utilise également ces particules dans les élastomères tels que le caoutchouc naturel, le polyisoprène, le polybutadiène et les copolymères de butadiène et de styrène.

On constate que l'introduction de particules composites selon l'invention apportent aux élastomères de la souplesse à basse température.

L'invention concerne l'utilisation des particules creuses comme charge renforçante dans les élastomères. On utilise de préférence ces particules dans les mêmes élastomères que ceux définis précédemment.

On constate que les élastomères et en particulier les pneumatiques acquièrent une plus grande souplesse à basse température suite à l'introduction de particules creuses selon l'invention dans la matrice.

Des exemples vont maintenant être donnés.

**EXEMPLE 1** (comparatif)

On utilise les réactifs suivants :

| | |
|---|---|
| latex TD180 (*) | 1.49 g sec (soit 6,47 g à 23 % dans l'éthanol) |
| silicate d'éthyle | 6,7 g |
| éthanol (95 %) | 385 g |
| eau | 83,8 g |
| ammoniaque (20 %) | 25,5 g |
| Polyvinylpyrrolidone (MW = 40.10³) | 1,6 g |

(*) le latex est constitué d'une suspension dans l'éthanol de particules de polystyrène, synthétisé en dispersion, de 2,4 μm, stabilisées par de la polyvinylpyrrolidone (MW = 40000) et de l'aérosol OT 100 (dioctysulfosuccinate de sodium, Cyanamid))

Dans un réacteur, on mélange le latex, l'eau, l'éthanol, l'ammoniaque, et l'on introduit le silicate d'éthyle en 3 heures.

On effectue cette opération à 25°C.

Les particules sont séparées par centrifugation et lavées dan l'éthanol. Les particules lavées sont séchées dans un étuve à 50°C.

On obtient des particules composites monodisperses constituées d'un corps en polystyrène de 2,4 μm et d'une écorce de silice de 0,08 μm.

L'indice de dispersion est de 0,3.

Par mesure MET, on constate que la taille des particules constitutives de l'écorce sont de 100 nm.

**EXEMPLE 2** (comparatif)

On procède comme pour l'exemple précédent à l'exception du fait que l'opération est mise en oeuvre à 50°C. Les particules composites obtenues sont monodisperses, non agglomérées, et constituées d'un corps en polystyrène de 2,4 μm et d'une écorce de silice de 0,08 μm.

Par mesure MET, on constate que la taille des particules constitutives de l'écorce est inférieure à 50 nm. L'écorce est compacte.

## EXEMPLE 3

Le présent exemple concerne la préparation de particules composites coeur polystyrène-butadiène écorce $Ca(OH)_2$ et silice

On utilise les réactifs suivants :

| | |
|---|---|
| Latex styrène/butadiène Rhoximat® SB012 | 80 g sec (soit 160 g à 50 % dans l'eau) |
| $CaCl_2$, $2H_2O$ (Prolabo - Normapur) | 2,1 g (dissous dans 101,6 g d'eau) |
| Silicate de sodium (Prolabo - Rectapur) | 238,8 g (dilué dans 161,2 g d'eau) |
| (d = 1,33) $H_2O$ épurée | 1010,8 g |
| NaOH 1 mol/l (Fixanal) | qsp pH = 9 |
| $H_2SO_4$ 1 mol/l (Fixanal) | qsp régulation pH = 9 |
| (*) le latex présente une granulométrie de 0,15 µm, et une température de transition vitreuse de -5°C. | |

Dans un réacteur de 2 litres, on ajoute le latex et 748 g d'eau épurée. (Pied de cuve) Le pH est ajusté à 5 par ajout de $H_2SO_4$

Dans le pied de cuve, la solution aqueuse de chlorure de calcium est ajoutée avec une vitesse de 4,9 ml/min.

Le pH du mélange réactionnel est maintenu à 5 pendant l'ajout de calcium.

Après ajout de chlorure de calcium, on ajoute une solution aqueuse de soude 1M pour augmenter le pH à 9 (masse de solution de soude introduite (1M) = 3,65 g). Le réacteur est ensuite chauffé à 50°C.

A 50°C et à pH = 9, on ajoute de façon simultanée, à pH constant, la solution de silicate de sodium (dilué dans 161,2 g d'eau) avec une vitesse d'ajout de 1,6 ml/min et la solution d'acide sulfurique (1M). La masse d'acide sulfurique nécessaire pour réguler est de 310 g.

Après la fin d'introduction du silicate, on effectue un temps de mûrissement de 2 heures à 50°C.

Après refroidissement les particules sont séparées par centrifugation, lavées et redispersées en milieu aqueux (ES : 20%).

A la suspension résultante, on ajoute 10% d'acide stéarique par rapport au solide à 80°C. La suspension est maintenue à 80°C puis atomisée (température de sortie = 110°C).

On récupère ainsi une poudre de particules hydrophobes.

## EXEMPLE 4:

Les particules atomisées de l'exemple 3 sont calcinées à 600°C pendant 4 heures (montée en température de 1°C/min).

Les particules ainsi obtenues sont caractérisées par MET.

Ces particules sont creuses et leur taille est voisine de 0,15 µm.

## Revendications

1. Particules composites constituées d'un coeur comprenant au moins un polymère organique au moins en partie recouvert par une ou plusieurs couches comprenant au moins un oxyde et/ou au moins un hydroxyde d'aluminium, de silicium, de zirconium et/ou d'un métal de transition et, entre le coeur et la couche précités, une couche comprenant un metal alcalino-terreux sous forme essentiellement d'hydroxyde.

2. Particules selon la revendication 1, **caractérisées en ce que** les particules composites comprennent au moins deux couches à base d'au moins un oxyde et/ou d'au moins un hydroxyde d'aluminium, de silicium, de zirconium et/ou d'un métal de transition.

3. Particules composites selon l'une des revendications 1 ou 2, **caractérisées en ce que** les particules composites comprennent en outre, au moins une couche de carbonate de calcium.

4. Particules composites selon l'une quelconque des revendications précédentes, **caractérisées en ce que** le polymère organique est choisi parmi les copolymères styrène-butadiène possédant des fonctions carboxylées, sulfatées ou sulfonatées, les copolymères acryliques, les copolymères styrène-butadiène-acrylamide et les élastomères polysiloxanes.

5. Particules composites selon l'une quelconque des revendications précédentes, **caractérisées en ce que** la température de transition vitreuse du polymère organique est comprise entre -200 et 0 °C.

6. Particules selon l'une quelconque des revendications précédentes, **caractérisées en ce que** les particules composites présentent un diamètre moyen d'au plus 5 μm.

7. Particules selon l'une quelconque des revendications précédentes, **caractérisées en ce que** l'épaisseur totale de la couche précitée est d'au plus 500 nm et de préférence comprise entre 5 et 200 nm.

8. Particules selon l'une quelconque des revendications précédentes, **caractérisées en ce qu'**elles comprennent en surface un composé organique choisi parmi l'acide stéarique, les stéarates et les huiles polysiloxanes.

9. Procédé de préparation de particules composites selon l'une quelconque des revendications 1 à 8, **caractérisé en ce que** l'on effectue les étapes suivantes :

   - on introduit à une suspension comprenant au moins un polymère organique, au moins un sel de métal alcalino-terreux, soluble dans les conditions de pH de ladite suspension, puis on augmente le pH de la phase liquide de la suspension par addition d'une base comme la soude, la potasse ou l'ammoniaque,
   - on met en contact ladite suspension avec au moins un agent précipitant et au moins un sel soluble d'aluminium, de silicium, de zirconium et/ou d'un métal de transition,
   - on sépare et on sèche les particules composites ainsi obtenues.

10. Procédé selon la revendication précédente, **caractérisé en ce que** le ou les polymères organiques sont mis en oeuvre sous la forme d'un latex, dont la phase liquide est alcoolique ou hydroalcoolique.

11. Procédé selon l'une quelconque des revendications 9 ou 10, **caractérisé en ce que** l'on utilise des sels solubles dans l'eau ou dans des solutions hydroalcooliques choisis de préférence parmi les silicates de métal alcalin, les aluminates de métal alcalin, les oxychlorures, les chlorures, les nitrates, les sulfates, d'aluminium, de zirconium, d'un métal de transition.

12. Procédé selon l'une quelconque des revendications 9 à 11, **caractérisé en ce que** l'on utilise un agent précipitant choisi parmi l'acide phosphorique, l'acide sulfurique, l'acide acétique, les hydroxydes de métaux alcalins, l'ammoniaque, le dioxyde de carbone.

13. Procédé selon l'une quelconque des revendication 9 à 12, **caractérisé en ce que** l'on effectue la mise en contact de telle sorte que l'on évite la sursaturation en sels, du milieu.

14. Procédé selon l'une quelconque des revendications 9 à 13, **caractérisé en ce que** l'on effectue la mise en contact de telle sorte que le pH soit constant.

15. Procédé selon l'une quelconque des revendications précédentes, **caractérisé en ce que** le sel de métal alcalino-terreux est choisi parmi les halogénures, comme notamment les chlorures, ou encore les sulfates.

16. Procédé de préparation de particules composites selon la revendication 2, **caractérisé en ce que** l'on met en oeuvre, autant de fois qu'il y a de couches, le procédé selon l'une quelconque des revendications 9 à 15.

17. Procédé selon l'une quelconque des revendications 9 à 16, **caractérisé en ce que** l'on ajoute un stabilisant au latex avant la première mise en contact avec la solution de sels solubles des éléments précités, ou encore de sels solubles de métal alcalino-terreux.

18. Procédé selon la revendication 17, **caractérisé en ce que** l'on ajoute 1 à 50 g de stabilisant par kg de latex, et plus préférentiellement moins de 20 g de stabilisant par kg de latex.

19. Utilisation des particules composites selon l'une quelconque des revendications 1 à 8, ou susceptibles d'être obtenues selon l'une quelconques des revendications 9 à 18, pour l'obtention de particules creuses.

20. Utilisation selon la revendication précédente, **caractérisée en ce que** l'on effectue une calcination des particules composites.

21. Utilisation selon la revendication 19, **caractérisée en ce que** l'on effectue un traitement consistant à mettre en contact lesdites particules composites avec un solvant du polymère organique, suivie d'une étape de séparation puis de séchage.

22. Utilisation des particules composites selon l'une quelconque des revendications 1 à 8, ou susceptibles d'être obtenues selon l'une quelconques des revendications 9 à 21 comme charge ou additif dans les plastiques et dans les élastomères.

23. Utilisation des particules composites selon l'une quelconque des revendications 1 à 8, ou susceptibles d'être obtenues selon l'une quelconques des revendications 9 à 21 comme renforçant choc pour les plastiques.

24. Utilisation des particules creuses obtenues à partir de particules composites, selon l'une quelconque des revendications 19 à 21, comme charge renforçante dans les élastomères.

25. Utilisation des particules creuses obtenues à partir de particules composites, selon l'une quelconque des revendications 19 à 21, comme charge renforçante dans les pneumatiques.


**Patentansprüche**

1. Verbundteilchen, die aus einem Kern gebildet sind, der wenigstens ein organisches Polymer umfasst, und der wenigstens teilweise von einer oder mehreren Schichten bedeckt ist, welche wenigstens ein Oxid und/oder wenigstens ein Hydroxid von Aluminium, Silizium, Zirkon und/oder einem Übergangsmetall umfasst/umfassen, und wobei zwischen dem Kern und der vorstehend genannten Schicht eine Schicht vorliegt, die ein Erdalkalimetall im Wesentlichen in Form eines Hydroxids umfasst.

2. Teilchen gemäß Anspruch 1, **dadurch gekennzeichnet, dass** die Verbundteilchen wenigstens zwei Schichten auf der Grundlage von wenigstens einem Oxid und/oder wenigstens einem Hydroxid von Aluminium, Silizium, Zirkon und/oder einem Übergangsmetall umfassen.

3. Verbundteilchen gemäß einem der Ansprüche 1 oder 2, **dadurch gekennzeichnet, dass** die Verbundteilchen zusätzlich wenigstens eine Schicht aus Calciumcarbonat umfassen.

4. Verbundteilchen gemäß einem der vorhergehenden Ansprüche, **dadurch gekennzeichnet, dass** das organische Polymer aus Styrol-Butadien-Copolymeren, die carboxylierte, sulfatierte oder sulfonierte funktionelle Gruppen aufweisen, Acrylcopolymeren, Styrol-Butadien-Acrylamid-Copolymeren und Polysiloxanelastomeren ausgewählt ist.

5. Verbundteilchen gemäß einem der vorhergehenden Ansprüche, **dadurch gekennzeichnet, dass** die Glasübergangstemperatur des organischen Polymers zwischen -200 und 0°C liegt.

6. Teilchen gemäß einem der vorhergehenden Ansprüche, **dadurch gekennzeichnet, dass** die Verbundteilchen einen mittleren Durchmesser von maximal 5 µm aufweisen.

7. Teilchen gemäß einem der vorhergehenden Ansprüche, **dadurch gekennzeichnet, dass** die Gesamtdicke der vorstehend genannten Schicht maximal 500 nm beträgt und bevorzugt zwischen 5 und 200 nm liegt.

8. Teilchen gemäß einem der vorhergehenden Ansprüche, **dadurch gekennzeichnet, dass** sie auf der Oberfläche eine organische Verbindung umfassen, die aus Stearinsäure, Stearaten und Polysiloxanölen ausgewählt ist.

9. Verfahren zur Herstellung der Verbundteilchen gemäß einem der vorhergehenden Ansprüche 1 bis 8, **dadurch gekennzeichnet, dass** die folgenden Schritte durchgeführt werden:

   - eine Suspension, die wenigstens ein organisches Polymer umfasst, wird mit wenigstens einem Erdalkalimetallsalz versetzt, welches unter den pH-Bedingungen der Suspension löslich ist, anschließend wird der pH-Wert der flüssigen Phase der Suspension durch Zugabe einer Base wie Natronlauge, Kali oder Ammoniak erhöht,
   - diese Suspension wird mit wenigstens einem Fällungsmittel und wenigstens einem löslichen Aluminium-, Silizium-, Zirkon- und/oder Übergangsmetallsalz in Kontakt gebracht,

-   die so erhaltenen Verbundteilchen werden abgetrennt und getrocknet.

**10.** Verfahren gemäß dem vorhergehenden Anspruch, **dadurch gekennzeichnet, dass** das organische Polymer oder die organischen Polymere in Form von Latex eingesetzt wird/werden, dessen flüssige Phase alkoholisch oder wässrig-alkoholisch ist.

**11.** Verfahren gemäß einem der Ansprüche 9 oder 10, **dadurch gekennzeichnet, dass** Salze verwendet werden, die in Wasser oder in wässrig-alkoholischen Lösungen löslich sind, wobei sie bevorzugt aus Alkalimetallsilikaten, Alkalimetallaluminaten, Aluminium-, Zirkoniumund Übergangsmetall-Oxychloriden, -Chloriden, -Nitraten und -Sulfaten ausgewählt werden.

**12.** Verfahren gemäß einem der Ansprüche 9 bis 11, **dadurch gekennzeichnet, dass** ein Fällungsmittel verwendet wird, welches aus Phosphorsäure, Schwefelsäure, Essigsäure, Alkalimetallhydroxiden, Ammoniak und Kohlenstoffdioxid ausgewählt ist

**13.** Verfahren gemäß einem der Ansprüche 9 bis 12, **dadurch gekennzeichnet, dass** das Inkontaktbringen derart durchgeführt wird, dass eine Übersättigung des Milieus an Salzen vermieden wird.

**14.** Verfahren gemäß einem der Ansprüche 9 bis 13, **dadurch gekennzeichnet, dass** das Inkontaktbringen derart durchgeführt wird, dass der pH-Wert konstant bleibt.

**15.** Verfahren gemäß einem der vorhergehenden Ansprüche, **dadurch gekennzeichnet, dass** das Erdalkalimetallsalz aus Halogeniden, wie beispielsweise den Chloriden, oder auch Sulfaten ausgewählt wird.

**16.** Verfahren zur Herstellung der Verbundteilchen gemäß Anspruch 2, **dadurch gekennzeichnet, dass** das Verfahren gemäß einem der Ansprüche 9 bis 15 so oft durchgeführt wird, wie Schichten vorliegen.

**17.** Verfahren gemäß einem der Ansprüche 9 bis 16, **dadurch gekennzeichnet, dass** das Latex mit einem Stabilisator versetzt wird vor dem ersten Inkontaktbringen mit der Lösung der löslichen Salze der vorstehend genannten Elemente, oder auch der löslichen Erdalkalimetallsalze.

**18.** Verfahren gemäß Anspruch 17, **dadurch gekennzeichnet, dass** 1 bis 50 g Stabilisator pro kg Latex hinzugegeben werden, und bevorzugter weniger als 20 g Stabilisator pro kg Latex.

**19.** Verwendung der Verbundteilchen gemäß einem der Ansprüche 1 bis 8, oder der Verbundteilchen, die nach einem der Ansprüche 9 bis 18 erhalten werden können, zur Gewinnung von Hohlteilchen.

**20.** Verwendung gemäß dem vorhergehenden Anspruch, **dadurch gekennzeichnet, dass** eine Kalzination der Verbundteilchen durchgeführt wird.

**21.** Verwendung gemäß Anspruch 19, **dadurch gekennzeichnet, dass** eine Behandlung durchgeführt wird, die darin besteht, diese Verbundteilchen mit einem Lösungsmittel des organischen Polymers in Kontakt zu bringen, gefolgt von einem Abtrennungsschritt und anschließend einer Trocknung.

**22.** Verwendung der Verbundteilchen gemäß einem der Ansprüche 1 bis 8, oder der Verbundteilchen, die nach einem der Ansprüche 9 bis 21 erhalten werden können, als Charge oder Additiv in Kunststoffen und Elastomeren.

**23.** Verwendung der Verbundteilchen gemäß einem der Ansprüche 1 bis 8, oder der Verbundteilchen, die nach einem der Ansprüche 9 bis 21 erhalten werden können, als Mittel zur Verstärkung der Schlagfestigkeit für Kunststoffe.

**24.** Verwendung der Hohlteilchen, die ausgehend von den Verbundteilchen gemäß einem der Ansprüche 19 bis 21 erhalten werden, als Verstärkungsmittel in Elastomeren.

**25.** Verwendung der Hohlteilchen, die ausgehend von den Verbundteilchen gemäß einem der Ansprüche 19 bis 21 erhalten werden, als Verstärkungsmittel in Reifen.

**Claims**

1. Composite particles constituted by a core comprising at least one organic polymer, at least partially coated with one or more layers comprising at least one oxide and/or at least one hydroxide of aluminium. silicon, zirconium, and/or a transition metal and, between the core and the said layer, a layer comprising an alkaline-earth metal essentially in the form of the hydroxide.

2. Particles according to claim 1, **characterized in that** the composite particles comprise at least two layers based on at least one oxide and/or hydroxide of aluminium, silicon, zirconium and/or a transition metal.

3. Composite particles according to claim 1 or claim 2, **characterized in that** the composite particles further comprise at least one layer of calcium carbonate.

4. Composite particles according to any one of the preceding claims, **characterized in that** the organic polymer is selected from styrene-butadiene copolymers containing carboxylated, sulphated or sulphonated functions, acrylic copolymers, styrene-butadiene-acrylamide copolymers and polysiloxane elastomers.

5. Composite particles according to any one of the preceding claims, **characterized in that** the glass transition temperature of the organic polymer is in the range -200°C to 0°C.

6. Particles according to any one of the preceding claims, **characterized in that** the mean diameter of the composite particles is at most 5 $\mu$m.

7. Particles according to any one of the preceding claims, **characterized in that** the total thickness of said layer is at most 500 nm, preferably in the range 5 to 200 nm.

8. Particles according to any one of the preceding claims, **characterized in that** they comprise an organic compound selected from stearic acid, stearates and polysiloxane oils on their surface.

9. A process for preparing composite particles according to any one of claims 1 to 8, **characterized in that** the following steps are carried out:

   • at least one alkaline-earth metal salt is introduced into a suspension comprising at least one organic polymer, said salt being soluble under the pH conditions of said suspension, then the pH of the liquid phase nf the suspension is increased by adding a base such as sodium hydroxyide, potassium hydroxide or ammonia;
   • said suspension is brought into contact with at least one precipitating agent and at least one soluble salt of aluminium, silicon, zirconium and/or a transition metal;
   • the composite particles obtained are separated and dried.

10. A process according to the preceding claim, **characterized in that** the organic polymer or polymers is/are used in the form of a latex, the liquid phase of which is alcoholic or hydroalcoholic.

11. A process according to claim 9 or claim 10, **characterized in that** water-soluble salts or salts which are soluble in hydroalcoholic solutions are used, preferably selected from alkali metal silicates, alkali metal aluminates or oxychlorides, chlorides, nitrates or sulphates of aluminium, zirconium or a transition metal.

12. A process according to any one of claims 9 to 11, **characterized in that** a precipitating agent is used that is selected from phosphoric acid, sulphuric acid, acetic acid, alkali metal hydroxides, ammonia, and carbon dioxide.

13. A process according to any one of claims 9 to 12, **characterized in that** contact is carried out under conditions which avoid supersaturation of the medium with the salts.

14. A process according to any one of claims 9 to 13, **characterized in that** contact is carried out such that the pH is constant.

15. A process according to any one of the preceding claims, **characterized in that** the alkaline-earth metal salt is selected from halides, in particular chlorides, or from sulphates.

16. A process for preparing composite particles according to claim 2, **characterized in that** the process according to any one of claims 9 to 15 is carried out as many times are there are layers.

17. A process according to any one of claims 9 to 16, **characterized in that** a latex stabiliser is added before first contact with the solution of soluble salts of the elements defined above or soluble salts of alkaline-earth metals.

18. A process according to claim 17, **characterized in that** 1 to 50 g of stabiliser per kg of latex is added, more preferably less than 20 g of stabiliser per kg of latex.

19. Use of composite particles according to any one of claims 1 to 8, or obtainable by any one of claims 9 to 18, to produce hollow particles.

20. Use according to the preceding claim, **characterized in that** the composite particles are calcined.

21. Use according to claim 19, **characterized in that** a treatment consisting of bringing said composite particles into contact with a solvent for the organic polymer is carried out, followed by a separation then a drying step.

22. Use of composite particles according to any one of claims 1 to 8, or obtainable by any one of claims 9 to 21, as a filler or additive in plastics and in elastomers.

23. Use of composite particles according to any one of claims 1 to 8, or obtainable according to any one of claims 9 to 21, as an impact strengthener for plastics.

24. Use of hollow particles obtained from composite particles according to any one of claims 19 to 21, as a reinforcing filler in elastomers.

25. Use of hollow particles obtained from composite particles according to any one of claims 19 to 21, as a reinforcing filler in tyres.